# EUROPEAN PATENT APPLICATION

(11) **EP 0 841 285 A1**
(43) Date of publication of application: **13.05.1998**
(21) Application number: 97308729.9
(22) Date of filing: 31.10.1997
(51) Int. Cl.: B66B 13/08, B66B 13/14, E05F 15/14, E05F 15/18, H02K 41/02

(54) **Elevator car door system**

(30) Priority: 07.11.1996 US 746282
(71) Applicant: OTIS ELEVATOR COMPANY, Farmington, CT 06032 (US)
(72) Inventor: Fargo, Richard N., Plainville, Connecticut 06062 (US); Kowalczyk, Thomas M., Farmington, Connecticut 06032 (US); Rivera, James A., Bristol, Connecticut 06010 (US); Tracey, Michael J., Cromwell, Connecticut 06416 (US); Thompson, Garnett, Bloomfield, Connecticut 06002 (US); Swaybill, Bruce P., Farmington, Connecticut 06032 (US); Towey, James P., Jr., Burlington, Connecticut 06013 (US); Murah, Bennie, Farmington, Connecticut 06032 (US); Reddy, Narasimha K., Bolton, Connecticut 06043 (US)
(74) Representative: Leale, Robin George

(57) **Abstract**

An elevator car door operating system includes a positioning and synchronization system (30) for ensuring simultaneous opening and closing of elevator car doors (12,14), a stationary motor secondary (22), a pair of moving motor primaries (24) driving the respective doors, and a single motor drive (78) for driving both motor primaries. The motor drive generates proper current and frequency to supply to both motor primaries. Since movement of both elevator car doors is synchronized and therefore requires substantially identical force at a given time, a single motor drive can be used to generate current for driving both doors.

## Description

The present invention relates to elevator systems and, more particularly, to systems driving elevator car doors thereof.

In conventional elevator systems, elevator car doors are opened and closed by door operators which are electromechanical assemblies that use a rotary electric motor, mechanical drive linkages, and a control box. The rotary electric motor drives one of the elevator car doors through the mechanical linkage that is attached to that door. The other door is physically pulled by a relating cable extended over two pulleys, with one end of the cable attached to one elevator car door and the other end attached to the other door. One disadvantage of the existing scheme is that when drive linkages become misaligned or loosened over time, the movement of the doors is not simultaneous. In order to maintain simultaneous opening and closing of the doors, the switches must be recalibrated periodically and the drive linkages must be readjusted. The process of recalibration and readjustment is time consuming and expensive. It is also desirable to reduce the cost of the door operating system itself, as well as other costs associated with it, and to improve performance and the aesthetic appearance of the doors.

Viewed from one aspect the present invention provides an elevator car door operating system for driving a first elevator car door and a second elevator car door of an elevator car, said first elevator car door being suspended from a first door hanger, said second elevator car door being suspended from a second door hanger, said first and second door hangers being movably mounted to a header, said header being fixedly secured to said elevator car, said system comprising:
a first motor primary fixedly attached to said first door hanger;
a second motor primary fixedly attached to said second door hanger;
a motor secondary attached to said header and extending the length of the travel of said doors, said motor secondary cooperating with said first motor primary and said second motor primary to selectively open and close said doors;
means for synchronizing movement of said first and second doors; and
a motor drive for generating current for said first motor primary and said second motor primary.

The present invention translates into significant cost savings, since only one motor drive is used for two motor primaries. Use of a single motor drive eliminates the need for the hardware associated with an additional drive.

The present invention may also significantly simplify the software by having a mechanical synchronisation system and a single motor drive.

An embodiment of the invention will now be described by way of example and with reference to the accompanying drawings, in which:-
FIG. 1 is a schematic perspective view of an elevator door system; and
FIG. 2 is a cut-away schematic perspective view of the elevator door system of FIG. 1 including a positioning and synchronization system and a motor drive, according to the present invention.

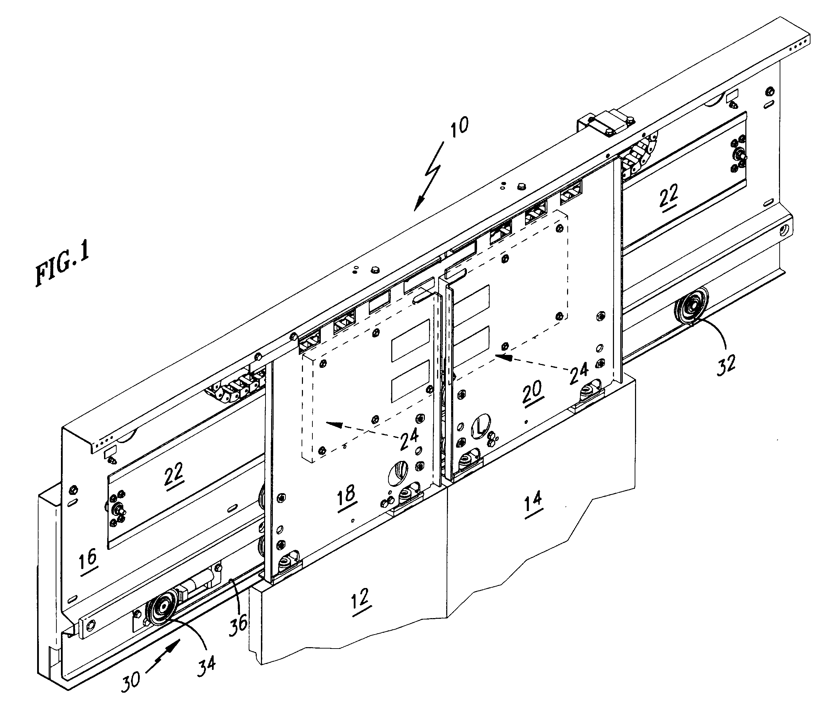

Referring to FIG. 1, an elevator car door system 10 for selectively opening and closing elevator car doors 12,14 includes a header bracket 16 which supports first and second door hangers 18,20 that have the first and second elevator car doors 12,14, suspended therefrom, respectively. A linear motor driving the elevator car doors 12,14 includes a motor secondary 22 attached to the header bracket 16 and a pair of motor primaries 24 attached one to each of the door hangers 18,20. Each motor primary 24 is a three (3) phase motor.

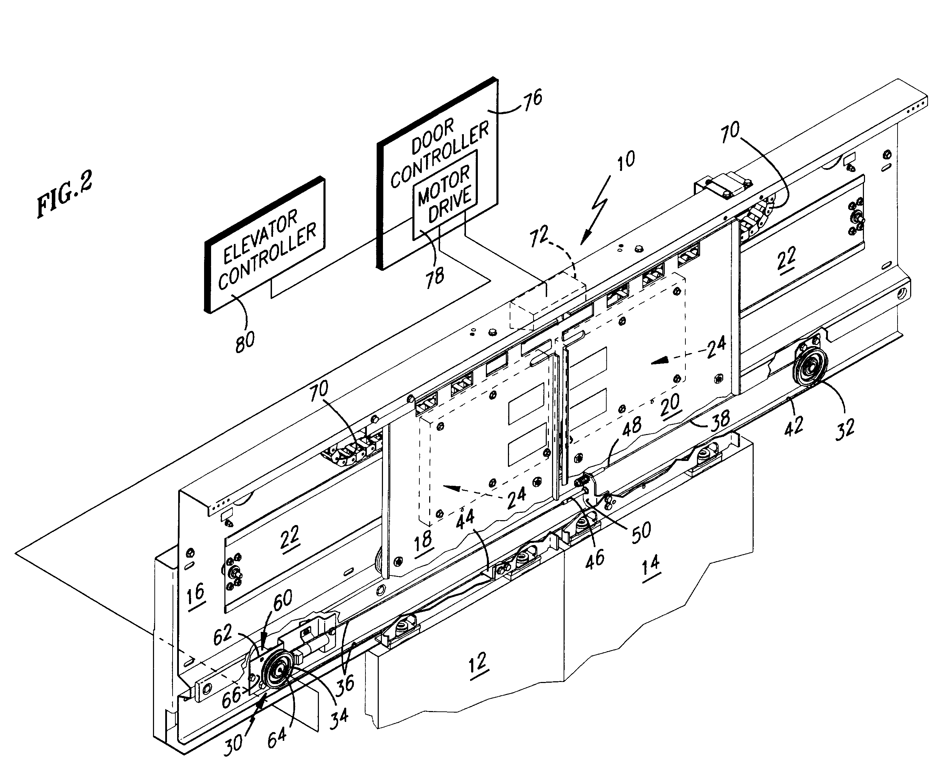

Referring to FIG. 2, a positioning and synchronization system 30 includes an idler pulley 32 secured to the header bracket 16 at one end thereof and an encoder pulley 34 secured to the header bracket at the opposite end thereof. A relating cable 36 extends over both pulleys 32,34 to form a closed loop with a first loop portion 38 and a second loop portion 42. The second portion 42 of the relating cable 36 is continuous and is fixedly attached onto the first door hanger 18 by means of a first hitch 44. The first portion 38 of the relating cable 36 includes two ends 46,48 of the cable which are attached to the second door hanger 20 by means of a second hitch 50. The attachment of the ends 46,48 of the cable 36 to the second hitch 50 is adjustable for periodic calibration of tension within the cable.

The pulleys 32,34 include high friction polymer liners that the relating cable 36 comes into contact with. The most effective type of high friction polymer for this embodiment is urethane.

The positioning and synchronization system 30 also includes a rotary encoder 60 coupled to the encoder pulley 34. The encoder 60 includes an encoder body 62 and a shaft 64 which is fixedly attached to the center of the encoder pulley 34 by means of a set screw (not shown). The encoder 60 and the encoder pulley 34 are mounted to the header bracket 16 by means of a mounting flange 66.

The door system 10 also includes a pair of flexible moving cables 70 and a termination box 72 attached to the header bracket 16, as best seen in FIG. 2. Each cable 70 attaches to the termination box 72 at one end thereof and to the respective motor primaries at the other end thereof.

A door controller 76 is disposed atop the elevator car and includes a motor drive 78. The motor drive 78 communicates with an elevator controller 80 and with the termination box 72. The motor drive 78 receives a series of incremental encoder pulses related to position of the motors from the encoder 60.

In operation, the linear motor drives the elevator car doors 12, 14 between open and closed positions. As the elevator car doors 12,14 travel in opposite directions, the positioning and synchronization system 30 ensures that both doors travel simultaneously at the same speed. The relating cable 36 pulls both doors simultaneously as the doors are opened or closed. Since there is essentially no slippage between the urethane liners of the pulleys 32,34 and the relating cable 36, the encoder 60 readings are accurate. The "no slippage" condition is achieved by having urethane liners for the pulleys and by ensuring proper tension in the relating cable. As the doors 12,14 travel between open and closed positions, the rotary encoder 60 generates incremental pulses which indicate changes in door position and direction. The encoder 60 sends signals to the door controller 76 which interprets the position and direction data and also derives the speed of the doors. The encoder signal represents a position feedback of the motors 24 to the motor drive 78.

The door controller 76 also calculates a force necessary to move the doors 12,14 and the current required to generate that force. The motor drive 78 portion of the door controller 76 then generates the proper frequency and amplitude of current to obtain the force requested. Vector control algorithms identical to algorithms used to control a single induction motor, are used to determine the amplitude and frequency of current required to obtain the desired force. Vector control algorithms require an accurate value of motor position, i.e. position feedback received from encoder 60. Since both doors 12,14 move substantially simultaneously with the same speed and consequently require the same force and current level, the single motor drive can supply the proper current to both motor primaries. The current is sent from the motor drive 78 to the termination box 72 via cables and then to each motor primary 24 via the flexible cables 70. The motor drive 78 controls 3 phases of motor current and these 3 phases supply both motors.

In this embodiment the motor primaries 24 are connected to the motor drive in parallel. Parallel connection means that both motors receive the same frequency and voltage from the motor drive. Since both motors have the same construction, they also receive the same amplitude and frequency of current, causing both motors to generate the same force. However, the motor primaries 24 can be connected to the motor drive 78 in series as well. Connecting both motors in series also causes the same current to flow in both motors.

The present embodiment translates into significant cost savings since only one motor drive 78 is used for two motor primaries 24. Use of a single motor drive eliminates the need for the hardware associated with an additional drive. The present embodiment also significantly simplifies software by having a mechanical synchronization system and a single motor drive.

A further benefit of the present embodiment is that when travel of one of the doors is interrupted, the other door also stops movement as a result of the relating configuration.

The rotary encoder 60 can be a conventional encoder manufactured by various vendors. For example, one type of such product that is suitable for the current application is a rotary encoder fabricated by Danaher Controls of Gurnee, Illinois, USA.

While the present invention has been illustrated and described with respect to a particular embodiment thereof, various modifications may be made. For example, although the illustrated embodiment describes the motor primaries as being attached to the door hangers and the motor secondary attached to the elevator car, it would be within the scope of the present invention to use a single motor drive to supply current to a pair of motor primaries attached to the elevator car, with the motor secondaries attached to the elevator car doors.

## Claims

1. An elevator car door operating system for driving a first elevator car door (12) and a second elevator car door (14) of an elevator car, said first elevator car door being suspended from a first door hanger (18), said second elevator car door being suspended from a second door hanger (20), said first and second door hangers being movably mounted to a header (16), said header being fixedly secured to said elevator car, said system comprising:
a first motor primary (24) fixedly attached to said first door hanger;
a second motor primary (24) fixedly attached to said second door hanger;
a motor secondary (22) attached to said header and extending the length of the travel of said doors, said motor secondary cooperating with said first motor primary and said second motor primary to selectively open and close said doors;
means (30) for synchronizing movement of said first and second doors; and
a motor drive (78) for generating current for said first motor primary and said second motor primary.

2. A system according to claim 1, wherein said motor drive (78) controls three (3) phases of motor current to supply said first motor primary and said second motor primary.

3. A system according to claim 1 or 2, wherein said means for synchronizing (30) comprises:
an idler pulley (32) attached to one side of said header (16);
an encoder pulley (34) attached to an opposite side of said header; and
a relating cable (36) extending over said idler pulley and said encoder pulley and forming a closed loop having a first loop portion (42) and a second loop portion (38).

4. A system according to claim 3, wherein said first loop portion (42) of said relating cable (36) is attached to said first door hanger (18) and said second loop portion (38) is attached to said second door hanger (20).

5. A system according to claim 3 or 4, wherein said idler pulley (32) and said encoder pulley (34) each have a high friction polymer liner for minimizing slippage between said pulleys and said relating cable (36).

6. A system according to claim 5, wherein said high friction polymer is urethane.

7. A system according to any of claims 1 to 6, wherein said first and second motor primaries (24) connect to said motor drive (78) in parallel.

8. A system according to any of claims 1 to 6, wherein said first and second motor primaries (24) connect to said motor drive (78) in series.

9. An elevator car door operating system for driving a first elevator car door (12) and a second elevator car door (14) of an elevator car, said first elevator car door being suspended from a first door hanger (18), said second elevator car door being suspended from a second door hanger (20), said first and second door hangers being movably mounted to a header (16), said header being fixedly secured to said elevator car, said system comprising:
a first motor primary (24) fixedly attached to said first door hanger;
a second motor primary (24) fixedly attached to said second door hanger;
a motor secondary (22) attached to said header and extending the length of the travel of said doors, said motor secondary cooperating with said first motor primary and said second motor primary to selectively open and close said doors;
means (30) for positioning and synchronizing movement of said first and second doors; and
a motor drive (78) for generating current for said first motor primary and said second motor primary based on a position feedback communicated from said means for positioning and synchronizing.

10. A system according to claim 9, wherein said means (30) for positioning and synchronizing comprises:
an idler pulley (32) attached to one side of said header;
an encoder pulley (34) attached to an opposite side of said header;
a relating cable (36) extending over said idler pulley and said encoder pulley and forming a closed loop having a first loop portion (38) and a second loop portion (42); and
a rotary encoder (60) attached to said encoder pulley for measuring position and direction of movement of said elevator car doors, said encoder providing position feedback to said motor drive.

11. A system according to claim 9 or 10, wherein said motor drive (78) controls three (3) phases of motor current to supply said first motor primary (24) and said second motor primary (24).

12. An elevator car door operating system for driving elevator car doors (12,14) of an elevator car, said system including a first motor primary (24) and a second motor primary (24) cooperating with a motor secondary (22) to selectively open and close said elevator car doors, said system including:
a motor drive (78) for generating current for said first motor primary and said second motor primary, said motor drive controlling three (3) phases of motor current to supply said first motor primary and said second motor primary.
